Europäisches Patentamt

**European Patent Office**

**Office européen des brevets**

(11) Numéro de publication: **0 084 066**

**A2**

# (12) DEMANDE DE BREVET EUROPEEN

(21) Numéro de dépôt: **82100208.6**

(22) Date de dépôt: **14.01.82**

(51) Int. Cl.³: **C 09 D 9/00**
**B 08 B 3/12**

(43) Date de publication de la demande:
**27.07.83 Bulletin 83/30**

(84) Etats contractants désignés:
**BE DE GB NL SE**

(71) Demandeur: **Ben Rais, Abdelfettah Dr.**
**90 Allée des Baladins**
**F-38100 Grenoble(FR)**

(72) Inventeur: **Ben Rais, Abdelfettah Dr.**
**90 Allée des Baladins**
**F-38100 Grenoble(FR)**

(54) **Procédé de délaquage et de dévernissage des métaux et alliages.**

(57) L'invention concerne les systèmes de délaquage et dévernissage, permettant d'éliminer le vernis, la laque et les impressions de peinture qui recouvrent les emballages métalliques et en particulier les déchets de fer blanc.

Il consiste en l'association d'un appareil d'ultra-sons, d'un solvant organominéral (à base d'alcool méthylique, de soude, de chlorure de méthylène, et d'alcool éthylique) et des conditions opératoires bien déterminées (par exemple : de fréquence 26 kHz, température 39°C et durée de traitement trois à cinq minutes).

Il s'adapte et s'intégre facilement dans une chaine continue de travail au sein d'une industrie.

Parmi les applications les plus intéressantes de l'invention nous citons le nettoyage des déchets métalliques dans l'industrie de désétamage du fer blanc.

La présente invention concerne les systèmes de délaquage et de dévernissage. Notre procédé permet d'éliminer le vernis, la laque, et les impressions de peinture qui recouvrent les emballages métalliques et en particulier les déchets de fer blanc.

Les ordures ménagères renferment une quantité importante d'emballage métallique.

La politique en matière d'énergie,de matières premières,et d'environnement,a incité à la récupération de la matière première contenue dans les emballages métalliques se trouvant dans les déchets ménagers.

Cette récupération permet de réduire la quantité de déchets ménagers, d'économiser de l'énergie et de la matière première.

Ces emballages métalliques sont constitués essentiellement du fer blanc (récipients et boites) dont la teneur en étain est de l'ordre de 0,5 %.

Le prix élevé de l'étain justifie sa récupération.Ainsi l'industrie de la récupération de l'étain s'est développée, un peu partout dans le monde.

Parmi les procédés variés utilisés dans ces industries nous citons le procédé électrolytique qui est le plus utilisé en Europe. Il consiste en l'électrolyse d'une solution de soude avec le fer blanc comme anode et une cathode en fer.

Mais ces récipients et ces boites sont en général très pollués par les déchets d'aliments, les impressions, le vernis, etc... Un nettoyage préalable leur est nécessaire. En particulier le vernis qui est une résine réticulée polymérisée et très difficile à éliminer d'une manière efficace, rapide et économique.

Il existe différents procédés de délaquage et de dévernissage :

- soit par procédé chimique, consistant à l'immersion de déchets du fer blanc dans des solutions organiques pendant un temps supérieur à 2 heures.

Les inconvénients de celui-ci sont :

- d'une part la durée du nettoyage est très longue. Elle rend l'intégration d'un tel système de nettoyage impossible, dans une chaîne continue de travail, car il ralentit considérablement la production.

- d'autre part cela nécessite l'utilisation de cuves de capacités énormes d'où un volume très important de solvant.

- soit par procédé thermique consistant à brûler les déchets de fer blanc dans un four à la température de l'ordre de 300° à 400°C et durant un temps qui ne dépasse pas généralement la minute.

Actuellement ce procédé thermique de délaquage dévernissage est efficace, rapide, s'intégrant facilement dans une chaîne continue de production. Malheureusement il présente de nombreux inconvénients :

1) Il est très couteux à l'investissement : environ 1,5 million de francs français (pour une unité qui traite 20.000 tonnes de déchets de fer blanc par an).

2) Il est très couteux à l'exploitation : à lui seul il utilise 30 % du coût total de l'exploitation.

3) Les conditions de son exploitation sont très pénibles et présentent constamment des difficultés sérieuses.

Le sytème de délaquage et de dévernissage selon l'invention permet d'éviter ces inconvénients.

Il est en effet constitué par l'association d'un bac d'ultrasons, d'un solvant et des conditions opératoires particulières.

Les emballages métalliques, recouverts de vernis, de peinture et d'autres impressions, sont plongés dans un bac à ultra-sons, contenant du solvant organominéral.

Ils subissent un traitement dans des conditions opératoires de fréquence de température et de durée bien définies.

Si ces emballages métalliques sont, en plus, pollués par les déchets d'aliments, ils subissent un traitement préalable dans un autre bac d'ultra-sons de dimensions plus faible, contenant un solvant minéral et avec des conditions opératoires différentes.

Ce deuxième traitement ne concerne pas les déchets de fer blanc provenant de certains pays européens soumis à une réglementation stricte d'hygiène. Dans ces pays les déchets de fer blanc provenant des ordures ménagères, sont débarrassés de leurs déchets d'aliments par un faible traitement thermique.

En comparant notre procédé de délaquage et de dévernissage au procédé thermique le plus utilisé actuellement nous notons les avantages suivants :

1) le coût de l'investissement est deux fois plus faible (environ 700 000 F.F. au lieu de 1 500.000 F.F.).

2) le coût d'exploitation est environ 20 fois plus faible.

3) la sécurité du personnel : pas de vapeur toxique dans l'atmosphère.

4) une très faible perte de solvant, presque négligeable.

5) une faible durée de traitement : 3 à 5 minutes.

6) une facilité d'adaptation sur une chaine continue de production.

x les chiffres donnés ci-dessus sont en franc français et relatifs à une unité qui traite environ 70 tonnes de fer blanc par jour.

A titre d'exemple non limitatif nous allons décrire ci-dessous un mode de réalisation d'une installation selon l'invention :

Préparation du solvant :

a) faire dissoudre 1 kg de soude dans une solution constituée de 10 litresd'éthanol et 10 litresde méthanol.

b) mélanger la soltution obtenue en a) avec 40 litres de dichlorométhane. Verser la soltution finale obtenue en b) dans un bac d'ultra-sons, et procéder au dévernissage-délaquage à la fréquence de 26 KHz, à la température de 39°C $\pm$ 1°C et durant 3 à 5 minutes.

Cependant si la ferraille est trop polluée par les déchets d'aliments elle subit un traitement préalable dans un bac d'ultra-sons comprenant de l'eau chaude à 90°C, à la fréquence de 26 KHz, et pendant 2 à 3 minutes.

Le bac d'ultra-sons est équipé :

- d'un système de chauffage intégré et réglable,

- d'un système de pompe-filtre permettant la régénération du solvant,

- d'une réhausse d'une fois et demie la largeur du bac, permettant la récupération du solvant par condensation et blocage des vapeurs de celui-ci.

Le séchage se fait en vapeur à condition que la vitesse de sortie de la ferraille du solvant soit $\leq$ 6 m/mn.

Ces bacs d'ultra-sons sont munis de nombreuses sécurités. Ils sont réalisables par un constructeur d'appareils d'ultra-sons.

Le procédé, objet de l'invention, peut être utilisé dans tous les cas où les métaux et alliages recouverts d'un vernis, des impressions, de la peinture etc... doivent être débarrassés de leur pollution, d'une manière rapide, efficace et économique.

Il peut être particulièrement utilisé dans les industries de désétamage du fer blanc.

Son intégration sur la chaine de travail se fait entre le broyeur et les bacs d'électrolyse.

Ainsi après leur remplissage de déchets de fer blanc broyés et légèrement compactés, les paniers sont transportés au moyen d'un convoyeur vers la cuve d'ultra-sons. Le chargement se fait par en haut.

Après dévernissage-délaquage et séchage, les paniers, au moyen du même convoyeur, sont remis sur la chaine de travail.

Pour une industrie de désétamage qui traite environ 20 000 tonnes de fer blanc par an, nous avons pris comme données :

- la densité moyenne apparente de la ferraille après broyage est de l'ordre de 300 $Kg/m^3$.

- le volume des paniers est de l'ordre de 0,25 $m^3$, d'où la masse de ferraille broyée contenue dans un panier est de l'ordre de 75 Kg.

Nous déterminons les dimensions du bac d'ultra-sons :

Longueur : 2,50 m
largeur : 1,00 m } de la cuve.
hauteur : 1,20 m

hauteur de la réhausse $\simeq$ 1,5 m.

donc hauteur de l'appareil ultra-sons en tout est $\simeq$ 2,70 m

volume ultra-sonique est 2,5 $m^3$.

La puissance ultrasonique est de 12,5 KW

REVENDICATIONS

1 - Système de délaquage-dévernissage caractérisé par la préparation du solvant organo-minéral constitué d'alcool méthylique, d'alcool éthylique, de soude caustique, et de chlorure de méthylène, ou par la combinaison de trois produits parmi les quatre constituants mentionnés ci-dessus.

2 - Système de délaquage-dévernissage selon la revendication 1 caractérisé par l'utilisation du solvant dans tous les domaines.

3 - Système de délaquage-dévernissage selon les revendications 1 et 2 caractérisé par l'association du solvant et d'un bac d'ultra-sons.